Europäisches Patentamt

European Patent Office

Office européen des brevets

(19)

(11) **EP 0 757 109 B1**

(12) **EUROPÄISCHE PATENTSCHRIFT**

(45) Veröffentlichungstag und Bekanntmachung des Hinweises auf die Patenterteilung:
**17.11.1999  Patentblatt 1999/46**

(51) Int Cl.⁶: **C21C 5/52**, C21C 5/42, F27D 23/04

(21) Anmeldenummer: **96810468.7**

(22) Anmeldetag: **16.07.1996**

(54) **Einschmelzaggregat und seine Verwendung zur Herstellung von Stahl in einem Arbeitsgang, insbesondere Gleichstrom-Lichtbogenofen oder Sauerstoffblaskonverter**

Smelting aggregate and its use for production of steel in one process step, in particular direct current (DC) arc furnace or oxygen converter

Appareil de fusion et utilisation de cet appareil pour la fabrication d'acier en une seule étape plus particulièrement constitué par un four à arc, à courant continu ou un convertisseur à soufflage d'oxygène

(84) Benannte Vertragsstaaten:
**AT ES FR IT**

(30) Priorität: **24.07.1995  DE 19526704**

(43) Veröffentlichungstag der Anmeldung:
**05.02.1997  Patentblatt 1997/06**

(73) Patentinhaber: **CONCAST STANDARD AG**
**8027 Zürich (CH)**

(72) Erfinder:
- **Grimfjärd, Göran**
  **72241 Västeras (SE)**
- **Lassander, Erik Alfred**
  **26040 Viken (SE)**
- **Lempa, Gerhard**
  **79761 Waldschut-Tiengen (DE)**
- **Stenkvist, Sven-Einar**
  **5200 Brugg (CH)**

(74) Vertreter: **Zeller, Josef et al**
**CONCAST STANDARD AG**
**Tödistrasse 9**
**CH-8027 Zürich (CH)**

(56) Entgegenhaltungen:
| | |
|---|---|
| **EP-A- 0 630 977** | **DE-A- 1 433 424** |
| **DE-A- 4 006 281** | **DE-A- 4 236 510** |
| **DE-B- 1 000 412** | **US-A- 3 812 275** |
| **US-A- 4 149 024** | **US-A- 5 286 277** |

- **PATENT ABSTRACTS OF JAPAN vol. 010, no. 139 (C-348), 22.Mai 1986 & JP-A-61 000513 (DAIDO TOKUSHUKO KK), 6.Januar 1986,**
- **RADEX RUNDSCHAU, Nr. 2, 1972, GRAEFELFING, DE, Seiten 79-91, XP002018227 E.FRIEDL: "Beitrag zur Dimensionierung von LD-Tiegeln"**
- **DEMAG Hüttentechnik,300 t-Demag-Pfannenofen für BOF mit DIR und PCA**

**Beschreibung**

TECHNISCHES GEBIET

Bei der Erfindung wird ausgegangen von einem Einschmelzaggregat nach dem Oberbegriff des Patentanspruchs 1. Die Erfindung betrifft auch eine Verwendung des Einschmelzaggregates.

STAND DER TECHNIK

Mit dem Oberbegriff des Patentanspruchs 1 nimmt die Erfindung auf einen Stand der Technik Bezug, wie er durch eine Veröffentlichung von H. G. Müller, L. P. Hofer, H. A. Berger, R. G. Genter, "State-of-the-Art Solutions For Cost-effective Steel Production" in der Zeitschrift: Steel Standard, Nr. 2, 1994, S. 2 - 7, bekannt ist. Dort wird in einem Wechselstromlichtbogenofen über mehrere Elektroden elektrische Energie für den Schmelzprozeß in den Ofenraum eingebracht. Sauerstoff, fossiler Brennstoff, Kohle und/oder Koks werden als weitere Energieträger durch Seitenlanzen bzw. Nachverbrennungsdüsen von der Seite zugeführt. Stickstoff, $CH_2$, $O_2$ oder inertes Gas werden ferner durch Spülsteine durch den Boden eingeleitet, um Stahl aus verschiedenen Anteilen von Flüssigeisen, festem Eisen, Eisenschwamm und Eisenschrott herzustellen. In diesem Prozeß tritt eine relativ hohe Badbewegung und ein heftiges Aufkochen durch die sehr hohe Entkohlungsrate des Flüssigeisens auf. Nachteilig dabei ist eine relativ inhomogene Schmelze.

Zum einschlägigen Stand der Technik wird noch auf die GB-A-939,521 verwiesen, aus der es bekannt ist, das Reaktorgefäß im Schmelzbereich mit einer von Gleichstrom durchflossenen, vertikal verstellbaren Magnetspule zu umgeben, welche eine magnetische Induktion im Bereich von 3 mT - 30 mT erzeugt. Dadurch wird das geschmolzene Metall in eine Kreisbewegung versetzt. Der Lichtbogen wird dadurch stabiler und besser steuerbar.

DARSTELLUNG DER ERFINDUNG

Die Erfindung, wie sie im Patentanspruch 1 definiert ist, löst die Aufgabe, ein Einschmelzaggregat der eingangs genannten Art derart weiterzuentwickeln, daß es einen verbesserten Betrieb ermöglicht.

Vorteilhafte Ausgestaltungen der Erfindung sind in den abhängigen Patentansprüchen definiert.

Ein Vorteil der Erfindung besteht darin, daß eine homogene Schmelze entsteht und die angegebene Reaktionsmittelzufuhr eine sehr wirksame Reaktion gewährleistet.

Gemäß vorteilhaften Ausgestaltungen der Erfindung können Schlacke und Schmelze mit relativ kleinen Kippwinkeln des Einschmelzaggregates aus diesem entfernt werden. Durch das Kippen kann das Reaktions- und Lichtbogengebiet leicht verändert werden, so daß die Reaktionszone erweitert wird. Zugeführtes ungünstig liegendes Material kann durch das Kippen des Einschmelzaggregates besser bearbeitet werden.

Ein unerwünschtes Spritzen von Schlacke in den Deckelbereich des Einschmelzaggregates kann mittels einer Magnetspule reduziert werden.

Die Erfindung eignet sich besonders für die Stahlgewinnung aus verschiedenen Anteilen von Flüssigeisen, festem Eisen, Eisenschwamm und Eisenschrott. Es können gleichzeitig 2 Einschmelzaggregate betrieben werden, eines im Konverterbetrieb und das andere im Lichtbogenbetrieb. Danach werden Elektrode und Reaktionsmittelzuleitung ausgetauscht und die Verfahren gewechselt.

KURZE BESCHREIBUNG DER ZEICHNUNGEN

Die Erfindung wird nachstehend anhand von Ausführungsbeispielen erläutert. Es zeigen:

Fig. 1    eine Schnittdarstellung von 2 gleich aufgebauten Reaktorgefäßen zur Metallveredelung, links mit einer durch einen Deckel geführten Graphitelektrode, rechts mit einer Sauerstoffzuleitung anstelle der Graphitelektrode,

Fig. 2    eine detailiertere Darstellung des linken Reaktorgefäßes von Fig. 1 in einer senkrechten Schnittansicht bezüglich derjenigen von Fig. 1 mit 2 Verschlußelementen von Abgußrinnen und einer Magnetspule zur elektromagnetischen Dämpfung von Bewegungen des Inhalts des Reaktorgefäßes und

Fig. 3    eine Schnittdarstellung durch ein Reaktorgefäß gemäß Fig. 2 mit einem außerhalb des Deckelbereiches angeordneten Kanal für die Zufuhr von zu schmelzendem Gut und zur Abfuhr von Gasen.

WEGE ZUR AUSFÜHRUNG DER ERFINDUNG

In den Figuren sind gleiche Teile mit gleichen Bezugszeichen gekennzeichnet.

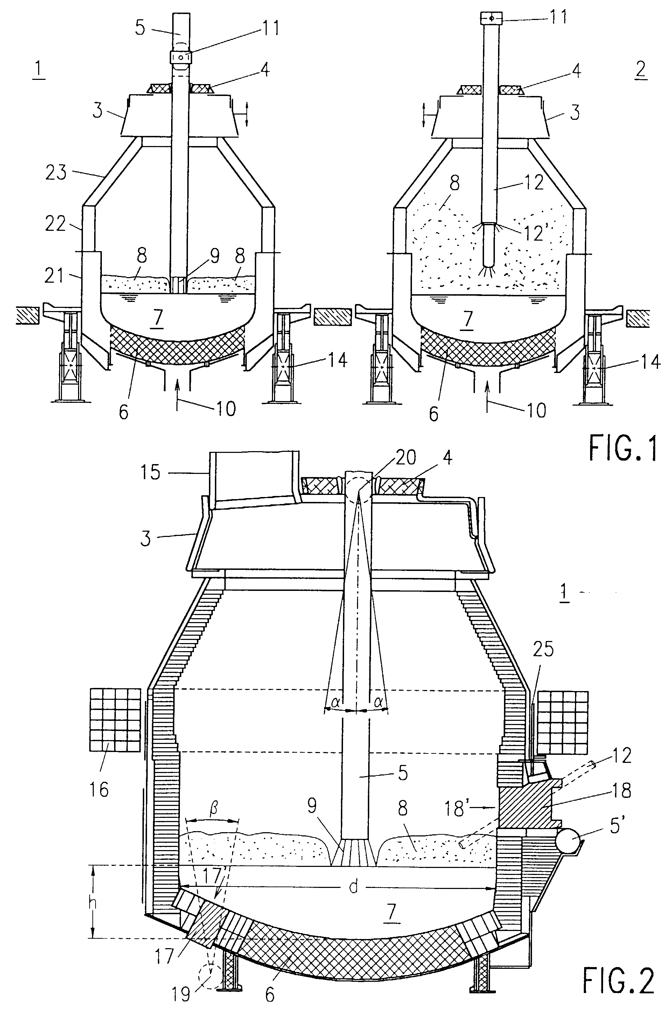

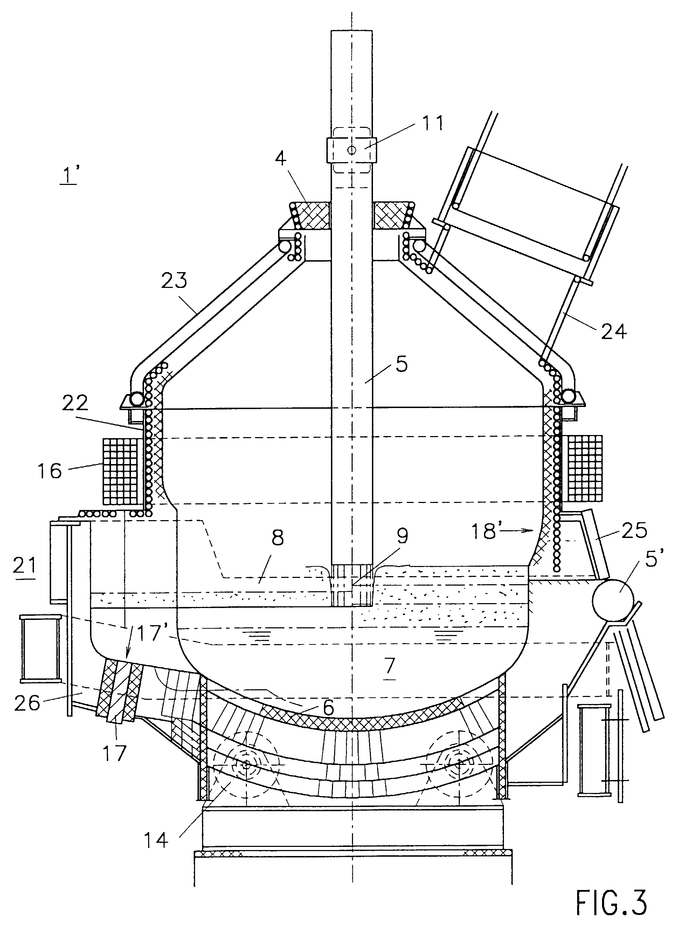

Fig. 1 zeigt 2 benachbarte, gleich aufgebaute Einschmelzaggregate bzw. Lichtbogenöfen bzw. Reaktorgefäße (1, 2) im Querschnitt mit einem Reaktorunterteil (21), einem etwas dünnerwandigeren zylindrischen Reaktormittelteil (22) und einem daran anschließenden, sich nach oben verjüngenden Kegelstumpfteil (23), der durch eine abnehmbare Abzugshaube bzw. Haube (3) und einen wassergekühlten Deckel (4) verschließbar ist. Das Reaktorunterteil (21) weist in einem zentralen Teil des Bodens eine durch ein Kühlfluid, vorzugsweise Luft (10), gekühlte Bodenelektrode (6) auf. Im unteren Teil des Reaktorunterteiles (21) befindet sich ein Schmelzbad bzw. eine Schmelze (7) und darüber eine Schlacke (8). Die Reaktorgefäße (1, 2) sind jeweils auf ein Rollenlager (14) abgestützt, vgl. auch Fig. 3, das Drehbewegungen des jeweiligen Reaktorgefäßes (1, 2) ermöglicht. Durch den elektrisch isolierenden Deckel (4) ist eine 1. Elektrode bzw. Graphitelektrode (5) geführt, zwischen der und der Schmelze (7) im Betrieb ein Lichtbogen (9) brennt. Über eine nur schematisch angedeutete Höhenverstelleinrichtung (11) kann die Graphitelektrode (5) in der Höhe verstellt und aus dem Reaktorgefäß (1) entfernt werden.

In dem Reaktorgefäß (2) ist anstelle der Graphitelektrode (5) eine Sauerstofflanze bzw. eine Gaszuleitung (12) zum Einbringen von Sauerstoff bzw. Gas mit einem Druck von z. B. 1,5 MPa vorgesehen. Durch diesen Gaszustrom verwirbeln Flüssigeisen und Schlacke (8). Die Gaszuleitung (12) kann mittels der Höhenverstelleinrichtung (11) in der Höhe verstellt und aus dem Reaktorgefäß (2) entfernt werden. Die Gaszuleitung (12) weist außer an derem Ende zusätzlich obere Düsen (12') auf, welche im oberen Ofenraum bzw. im Reaktormittelteil (22) und im Kegelstumpfteil (23) für eine Nachverbrennung der Gase sorgen. Unterhalb der oberen Düsen (12') weist die stabförmige Gaszuleitung (12) gegenüber deren oberem Teil einen kleineren Durchmesser auf.

Anstelle der Gaszuleitung (12) kann die Graphitelektrode (5) in das Reaktorgefäß (2) eingeführt werden. Entsprechend kann in das Reaktorgefäß (1) anstelle der Graphitelektrode (5) die Gaszuleitung (12) eingeführt werden. Somit läßt sich jedes der beiden Reaktorgefäße (1, 2) sowohl als Konverter mit einer Gaszuleitung (12) als auch als Lichtbogenofen mit einer Graphitelektrode (5) betreiben. Damit läßt sich aus Eisenschwamm und/oder Roheisen und/oder Schrott und/oder festem Eisen in nur einem Reaktorgefäß (1, 2) Stahl herstellen.

Für reinen Lichtbogenbetrieb wären das Reaktormittelteil (22) und das Kegelstumpfteil (23) nicht erforderlich. Für reinen Konverterbetrieb wäre die Bodenelektrode (6) nicht erforderlich.

Fig. 2 zeigt das Reaktorgefäß (1) gemäß Fig. 1 in einem bezüglich Fig. 1 orthogonalen Querschnitt. Durch eine Öffnung bzw. einen Abzugskanal (15) kann während des Betriebes des Lichtbogens z. B. Eisenschwamm in das Reaktorgefäß (1) zugeführt werden; gleichzeitig können Prozeßabgase aus dem Reaktorgefäß (1) entweichen.

Um im Konverterbetrieb des Reaktorgefäßes (1) einen effizienten sauerstoffblasenden Prozeß zu gewährleisten, soll das Verhältnis einer Schmelzbadhöhe (h) zu einem Schmelzbaddurchmesser (d) im Bereich von 0,05 - 5, vorzugsweise im Bereich von 0,25 - 0,35 liegen. Das Reaktionsvolumen soll innerhalb eines Bereiches von 0,5 $m^3$/t- 1,5 $m^3$/t Schmelzgut, vorzugsweise innerhalb von 0,77 $m^3$/t- 1,29 $m^3$/t liegen.

Im Bodenbereich des Reaktorunterteiles (21) befindet sich lateral benachbart zur Bodenelektrode (6) und von dieser elektrisch isoliert ein 1. Abstichkanal bzw. eine Abstichrinne (17') für die Schmelze (7). Diese Abstichrinne (17') ist durch ein hydraulisch betätigbares Abstichbauteil (nicht dargestellt) und ein 1. Verschlußelement bzw. einen Abstichrinnenverschluß (17) verschließbar. Das Reaktorgefäß (1) läßt sich mittels einer nicht dargestellten Dreheinrichtung um einen 1. Drehpunkt (19) um einen vorgebbaren Drehwinkel (β) von ≤ 60°, vorzugsweise von ≤ 35°, insbesondere um 30 drehen. Dieser 1. Drehpunkt (19) befindet sich dicht unterhalb der Bodenseite des Reaktorunterteils (21) zwischen Abstichrinne (17') und Bodenelektrode (6); er ermöglicht ein vollständiges Entleeren des Flüssigmetalls aus dem Reaktorgefäß (1).

Im vertikalen zylindrischen Bereich des Reaktorunterteiles (21) befindet sich geringfügig oberhalb des Bereiches der Schlacke (8) im Lichtbogenbetrieb ein 2. Abstichkanal bzw. eine Schlackenrinne (18') zum Entfernen der Schlacke (8). Diese Schlackenrinne (18') ist durch ein hydraulisch betätigbares 2. Verschlußelement (nicht dargestellt) und einen Schlackenstopfen (18) verschließbar, der an der Innenwand des Reaktorgefäßes (1) glatt abschließt und sich nach außen erweitert. Zum Entfernen der Schlacke (8) läßt sich das Reaktorgefäß (1) um einen 2. Drehpunkt (20) im zentralen Bereich der Graphitelektrode (5) im Bereich des Deckels (4) um einen vorgebbaren Drehwinkel (α) im Bereich von ± 45°, vorzugsweise im Bereich von ± 10°, insbesondere von ± 8°, drehen. Der sich nach außen erweiternde Schlackenstopfen (18) gewährleistet ein leichtes Öffnen und verhindert eine Pfropfenbildung während des sauerstoffblasenden Prozesses auf dessen Innenfläche; er ist leicht austauschbar.

Bei offener Schlackenrinne (18') kann die Gaszuleitung (12) in die Schlacke (8) eingeführt werden, um die chemische Reaktion in der Schmelze und Schlacke (8) zu beschleunigen, wie es gestrichelt angedeutet ist.

Ein abgebrannter Elektrodenstab (5') seitlich unterhalb der Schlackenrinne (18') dient zur Erleichterung des Abgusses der Schlacke (8).

Um den oberen Bereich des Reaktormittelteiles (22) ist eine Magnetspule (16) angeordnet, um starke, unkontrollierte Bewegungen der Schmelze (7) und ein Schäumen der Schlacke (8) während des Konverterprozesses durch eine elektromagnetische Dämpfung zu reduzieren. Die Magnetspule (16) wird über einen nicht dargestellten Gleichrichter mit Gleichstrom gespeist.

Bei einem Reaktorgefäß (1, 2) mit einem Durchmesser von 6,1 m für 160 t Schmelzgut sollte die Magnetspule (16) einen mittleren Durchmesser von 9 m aufweisen. Die magnetische Induktion B der ringförmigen Magnetspule (16) sollte im Betrieb im Bereich von 50 mT - 120 mT liegen; sie berechnet sich in Tesla gemäß:

$$B = \mu_0 \cdot i \cdot n/D,$$

wobei $\mu_0$ die magnetische Feldkonstante ($4 \cdot \pi \cdot 10^{-7}$), i den Spulenstrom in Ampere, n die Anzahl der Windungen der Magnetspule (16) und D deren mittleren Durchmesser in Meter bedeuten. Für eine benötigte magnetische Induktion B von 100 mT und einen Spulenstrom i von 25 kA werden somit 30 Windungen z. B. aus Kupfer mit einer Gesamtlänge von 850 m benötigt. Bei einer Stromdichte im Leiter von 6 A/mm² wird eine Querschnittsfläche von 41,67 cm² benötigt, was zu einer Kupfermasse von 31,5 t führt. Die erforderliche Spulenspannung beträgt 6 · 850 · 0,017 V = 87 V und die erforderliche Leistung 87 · 25 kW = 2,175 MW. Bei einer Betriebsdauer von 30 min wird somit eine elektrische Leistung von 7 kWh/t Stahl benötigt. Im Lichtbogenbetrieb dient diese Magnetspule (16) zur Steuerung der Badbewegung mit einer geringeren magnetischen Induktion.

Anstelle einer einzigen Magnetspule (16) im oberen Reaktormittelteil (22) können z. B. auch 2 Spulen mit halber Leistung verwendet werden, von denen eine im oberen Reaktormittelteil (22) und die andere im Reaktorunterteil (21) oder unterhalb des Bodens des Reaktorunterteiles (21) angeordnet sind (nicht dargestellt). Um die Wirkung des Magnetfeldes der Magnetspule (16) nicht zu schwächen, sollten zumindest einige Wandteile der Reaktorgefäße (1, 2) aus nichtmagnetischem Material/Stahl bestehen. Durch die Verwendung dieser Magnetspule (16) läßt sich der Verschleiß von feuerfesten Steinen für die Reaktorgefäße (1, 2) verringern.

Fig. 3 zeigt in Abwandlung zu Fig. 2 ein Reaktorgefäß (1'), bei dem anstelle des Abzugskanals (15) eine Öffnung bzw. ein Seitenkanal (24) im Kegelstumpfteil (23) zum Beschicken mit zu schmelzendem Gut und Abführen von Gasen vorgesehen ist. Die Schlackenrinne (18') ist nicht mit einem Schlackenstopfen (18), wie bei dem Reaktorgefäß (1) gemäß Fig. 2, sondern mit einer Schlackentür (25) verschlossen. Das Reaktorunterteil (21) weist eine asymmetrische Erweiterung bzw. links einen Erker (26) auf, in dem die mit einem Abstichrinnenverschluß (17) verschließbare Abstichrinne (17') angeordnet ist, ebenfalls im Bodenbereich des Reaktorunterteils (21).

Die Reaktorgefäße (1, 2) können z. B. mit 3phasigen Wechselstromlichtbögen (nicht dargestellt), vorzugsweise jedoch mit Gleichstromlichtbögen betrieben werden, welche eine gleichförmigere Hitzeverteilung gewährleisten. Wichtig ist, daß die Reaktorgefäße (1, 2) die Gestalt und Abmessungen von Konvertern aufweisen und sowohl als Konverter als auch als Lichtbogenöfen betrieben werden können. Abstichrinne (17') und Schlackenrinne (18') mit zugehörigen Verschlußeinrichtungen (17, 18, 25) lassen sich von innen und außen reparieren bzw. warten.

Es versteht sich, daß sowohl das Reaktorunterteil (21) als auch das Reaktormittelteil (22) und das Kegelstumpfteil (23) fluidgekühlt sein können.

Statt zur Veredelung von Eisen kann das Einschmelzaggregat (1, 2) auch zur Veredelung anderer Metalle, wie z. B. von Kupfer und Blei, zur Gewinnung von Oxiden, z. B. Titanoxiden, und zur Schlackenaufbereitung verwendet werden. Dabei kann durch die Reaktionsmittelzuleitung (12) statt Sauerstoff z. B. Kohlenstoff eingeführt werden.

BEZEICHNUNGSLISTE

| | |
|---|---|
| 1, 1', 2 | Reaktorgefäße, Lichtbogenöfen, Einschmelzaggregate |
| 3 | wassergekühlte Haube von 1, 2, Abzugshaube |
| 4 | Deckel |
| 5 | 1. Elektrode, Graphitelektrode |
| 5' | Elektrodenstab als Außgießhilfe |
| 6 | Bodenelektrode, 2. Elektrode |
| 7 | Schmelze, Schmelzbad |
| 8 | Schlacke |
| 9 | Lichtbogen |
| 10 | Luft, Kühlfluid |
| 11 | Höhenverstelleinrichtung von 5, 12 |
| 12 | Gaszuleitung, Sauerstofflanze, Reaktionsmittelzuleitung |
| 12' | obere Düsen von 12 |
| 14 | Rollenlager |
| 15 | Öffnung, Abzugskanal |
| 16 | Magnetspule |
| 17 | 1. Verschlußelement im Ofenboden zum Ablassen der Schmelze 7, Abstichbauteil, Abstichrinnenverschluß |
| 17' | 1. Abstichkanal, Abstichrinne |
| 18 | 2. Verschlußelement in der Seitenwand von 1, 2 zum Auslassen von 8, Schlackenstopfen |
| 18' | 2. Abstichkanal, Schlackenrinne |
| 19 | 1. Drehpunkt von 1, 2 für einen Drehwinkel β |
| 20 | 2. Drehpunkt von 1, 2 für einen Drehwinkel α |
| 21 | Reaktorunterteil von 1, 2 |
| 22 | zylindrisches Reaktormittelteil von 1, 2 |
| 23 | Kegelstumpfteil von 1, 2 |
| 24 | Seitenkanal, Öffnung |
| 25 | Schlackentür |
| 26 | Absticherker |
| d | Durchmesser von 7, Schmelzbaddurchmesser |
| h | Höhe von 7, Schmelzbadhöhe |
| α, β | Drehwinkel |

**Patentansprüche**

1. Einschmelzaggregat, bestehend aus einem im Wechselbetrieb als Gleichstrom-Lichtbogenofen betriebenen Aufblaskonverter,

a) mit mindestens einer ersten ein- und ausfahrbaren Zuleitung (5, 12), welche in einem Lichtbogenbetrieb mindestens eine 1. Elektrode (5) ist,

b) mit mindestens einer zweiten Elektrode (6),

c) mit mindestens einer verschließbaren Abstichrinne (17') zum Entleeren eines geschmolzenen Gutes (7),

d) mit mindestens einer verschließbaren Schlackenrinne (18') zum Entfernen von Schlacke (8),

e) mit einem Deckel (4), durch welchen die mindestens eine erste ein- und ausfahrbare Zuleitung (5, 12) geführt ist,

f) mit mindestens einer weiteren Öffnung (15, 24),

g) wobei das Einschmelzaggregat um einen ersten Drehpunkt (19) dicht unterhalb der Bodenseite eines Reaktorunterteils (21) um einen vorgebbaren ersten Drehwinkel ($\beta$) drehbar gelagert ist,

dadurch gekennzeichnet,

h) daß die mindestens eine erste Elektrode (5) durch mindestens eine Reaktionsmittelzuleitung (12) austauschbar ist, derart, daß die mindestens eine erste Elektrode (5) und die mindestens eine Reaktionsmittelzuleitung (12) im Betrieb zeitlich nacheinander durch dieselbe Öffnung im Deckel (4) geführt sind,

i) daß die mindestens eine zweite Elektrode eine Bodenelektrode (6) ist,

j) daß sich der erste Drehpunkt (19) zwischen Abstichrinne (17') und Bodenelektrode (6) befindet und

k) daß das Einschmelzaggregat um einen zweiten Drehpunkt (20) im zentralen Bereich der ersten beweglichen Zuleitung (5, 12) im Bereich von deren Deckel (4) in einer Haube (3) um einen vorgebbaren zweiten Drehwinkel ($\alpha$) drehbar gelagert ist.

2. Einschmelzaggregat nach Anspruch 1, dadurch gekennzeichnet, daß der erste Drehwinkel ($\beta$) $\leq 60°$ ist.

3. Einschmelzaggregat nach einem der vorhergehenden Ansprüche, dadurch gekennzeichnet, daß der zweite Drehwinkel ($\alpha$) $\leq \pm45°$ ist.

4. Einschmelzaggregat nach einem der vorhergehenden Ansprüche, dadurch gekennzeichnet,

a) daß das Verhältnis einer Schmelzbadhöhe (h) zu einem Schmelzbaddurchmesser (d) eines Schmelzbereiches (7) im Einschmelzaggregat (1, 2) im Bereich von 0,05 - 5 liegt und

b) daß das Reaktionsvolumen im Einschmelzaggregat (1, 2) innerhalb eines Bereiches von 0,5 $m^3$/t - 1,5 $m^3$/t Schmelzgut liegt.

5. Einschmelzaggregat nach Anspruch 4, dadurch gekennzeichnet, daß das Verhältnis von Schmelzbadhöhe (h) zu Schmelzbaddurchmesser (d) des Schmelzbereiches (7) im Einschmelzaggregat (1, 2) im Bereich von 0,25 - 0,35 liegt.

6. Einschmelzaggregat nach Anspruch 4 oder 5, dadurch gekennzeichnet, daß das Reaktionsvolumen im Einschmelzaggregat (1, 2) innerhalb eines Bereiches von 0,77 $m^3$/t - 1,29 $m^3$/t Schmelzgut liegt.

7. Einschmelzaggregat nach einem der vorhergehenden Ansprüche, dadurch gekennzeichnet, daß die mindestens eine verschließbare Schlackenrinne (18') mit einem sich nach außen erweiternden Schlackenstopfen (18) verschlossen ist, welcher an der Innenwand des Reaktorgefäßes (1, 2) glatt abschließt.

8. Einschmelzaggregat nach einem der vorhergehenden Ansprüche, dadurch gekennzeichnet,

a) daß mindestens eine gleichstromgespeiste Magnetspule (16) um einen Reaktormittelteil (22) des Einschmelzaggregates angeordnet ist, zur magnetischen Dämpfung von Bewegungen von Schmelze (7) und/oder Schlacke (8) im Inneren des Einschmelzaggregates, und

b) daß die durch diese mindestens eine Magnetspule (16) im Betrieb erzeugte magnetische Induktion im Bereich von 50 mT - 120 mT liegt.

9. Einschmelzaggregat nach einem der vorhergehenden Ansprüche, dadurch gekennzeichnet, daß die mindestens eine weitere Öffnung (15) zusammen mit dem Deckel (4) innerhalb einer Haube (3) angeordnet ist.

10. Verwendung des Einschmelzaggregates nach einem der vorhergehenden Ansprüche zur Herstellung von Stahl,

a) wobei in einer ersten Verfahrensstufe einer Schmelze in einem Konverterverfahren unter Druck Sauerstoff mittels einer Gaszuleitung (12) in den Innenraum des Einschmelzaggregates zugeführt,

b) danach die Gaszuleitung (12) durch eine Elektrode (5) ersetzt und

c) in einer zweiten Verfahrensstufe ein Lichtbogenschmelzen im selben Einschmelzaggregat durchgeführt wird.

## Claims

1. Melt-down unit, comprising a top-blowing furnace operated alternately as a direct-current arc furnace,

   a) having at least one first insertable and removable supply line (5, 12), which in arc mode is at least one first electrode (5),
   b) having at least one second electrode (6),
   c) having at least one closable tapping launder (17') for discharging a molten material (7),
   d) having at least one closable slag launder (18') for removing slag (8),
   e) having a cover (4), through which the at least one first insertable and removable supply line (5, 12) is passed,
   f) having at least one further opening (15, 24),
   g) wherein the melt-down unit is supported so as to be rotatable through a preselectable first angle of rotation ($\beta$) about a first centre of rotation (19) just below the bottom side of a reactor bottom part (21),

   characterized in

   h) that the at least one first electrode (5) is exchangeable by at least one reactant supply line (12) in such a way that the at least one first electrode (5) and the at least one reactant supply line (12) during operation are passed successively with regard to time through the same opening in the cover (4),
   i) that the at least one second electrode is a bottom electrode (6),
   j) that the first centre of rotation (19) is situated between tapping launder (17') and bottom electrode (6) and
   k) that the melt-down unit is supported so as to be rotatable through a preselectable second angle of rotation ($\alpha$) about a second centre of rotation (20) in the central region of the first movable supply line (5, 12) in the region of its cover (4) in a hood (3).

2. Melt-down unit according to claim 1, characterized in that the first angle of rotation ($\beta$) $\leq 60°$.

3. Melt-down unit according to one of the preceding claims, characterized in that the second angle of rotation ($\alpha$) is $\leq \pm45°$.

4. Melt-down unit according to one of the preceding claims, characterized in

   a) that the ratio of a melting bath height (h) to a melting bath diameter (d) of a melting region (7) in the melt-down unit (1, 2) is in the range of 0.05 - 5 and

   b) that the reaction volume in the melt-down unit (1, 2) is within a range of 0.5 $m^3$/t - 1.5 $m^3$/t of material to be molten.

5. Melt-down unit according to claim 4, characterized in that the ratio of melting bath height (h) to melting bath diameter (d) of the melting region (7) in the melt-down unit (1, 2) is in the range of 0.25 - 0.35.

6. Melt-down unit according to claim 4 or 5, characterized in that the reaction volume in the melt-down unit (1, 2) is within a range of 0.77 $m^3$/t - 1.29 $m^3$/t of material to be molten.

7. Melt-down unit according to one of the preceding claims, characterized in that the at least one closable slag launder (18') is closed by means of an outwardly widening slag stopper (18), which terminates smoothly at the inner wall of the reactor vessel (1, 2).

8. Melt-down unit according to one of the preceding claims, characterized in

   a) that at least one d.c. supplied magnet coil (16) is disposed around a reactor middle part (22) of the melt-down unit for magnetically damping movements of melting charge (7) and/or slag (8) in the interior of the melt-down unit, and
   b) that the magnetic induction generated during operation by said at least one magnet coil (16) lies in the range of 50 mT - 120 mT.

9. Melt-down unit according to one of the preceding claims, characterized in that the at least one further opening (15) is disposed together with the cover (4) inside a hood (3).

10. Use of the melt-down unit according to one of the preceding claims for manufacturing steel,

   a) wherein in a first processing stage of a melting charge in a converter process oxygen is fed by means of a gas supply line (12) into the interior of the melt-down unit,
   b) then the gas supply line (12) is replaced by an electrode (5) and
   c) in a second processing stage arc melting is effected in the same melt-down unit.

## Revendications

1. Appareil de mise en fusion, constitué d'un convertisseur à soufflage exploité alternativement comme four à arc électrique à courant continu, comportant:

a) au moins une première conduite d'amenée (5, 12) que l'on peut introduire et sortir et qui, en exploitation en four à arc électrique, est au moins une première électrode (5),

b) au moins une seconde électrode (6)

c) au moins une goulotte de coulée (17'), obturable, pour évacuer une matière en fusion (7),

d) au moins une goulotte de laitier (18') obturable, pour évacuer du laitier (8),

e) un couvercle (4) à travers lequel passe la première conduite d'amenée (5, 12) dont il y a au moins une et que l'on peut introduire et sortir,

f) au moins une autre ouverture (15, 24),

g) dans lequel l'appareil de mise en fusion est porté avec liberté de rotation, d'un premier angle de rotation ($\beta$) que l'on peut prescrire, autour d'un premier point de rotation (19) situé juste en-dessous de la face du fond d'une partie inférieure (21) du récipient de la réaction,

caractérisé par le fait,

h) que la première électrode (5), dont il y a au moins une, peut être remplacée par au moins une conduite (12) d'amenée d'un agent de la réaction, de façon qu'en exploitation, la première électrode (5), dont il y a au moins une, et la conduite (12) d'amenée de l'agent de la réaction passent périodiquement et successivement par la même ouverture dans le couvercle (4),

i) que la seconde électrode, dont il y a au moins une, est une électrode de fond (6),

j) que le premier point de rotation (19) se trouve entre goulotte de coulée (17') et électrode de fond (6), et

k) que l'appareil de mise en fusion est porté, avec liberté de rotation d'un second angle de rotation ($\alpha$), que l'on prescrire, autour d'un second point de rotation (20) situé dans la zone centrale de la première conduite d'amenée mobile (5, 12), au voisinage de son couvercle (4) dans une hotte (3).

2. Appareil de mise en fusion selon la revendication 1, caractérisé par le fait que le premier angle de rotation ($\beta$) est $\leq 60°$.

3. Appareil de mise en fusion selon l'une des revendications précédentes, caractérisé par le fait que le second angle de rotation ($\alpha$) est $\leq \pm 45°$.

4. Appareil de mise en fusion selon l'une des revendications précédentes, caractérisé par le fait

a) que le rapport entre une hauteur (h) du bain de fusion et le diamètre (d) du bain de fusion d'une zone de mise en fusion (7) dans l'appareil de mise en fusion (1, 2) se situe sur la plage de 0,05 - 5 et

b) que le volume de réaction dans l'appareil de mise en fusion (1, 2) se situe à l'intérieur d'une plage de 0,5 m$^3$/t - 1,5 m$^3$/t de matières à mettre en fusion.

5. Appareil de mise en fusion selon la revendication 4, caractérisé par le fait que le rapport entre une hauteur (h) du bain de fusion et le diamètre (d) du bain de fusion de la zone de mise en fusion (7) dans l'appareil de mise en fusion (1, 2) se situe sur la plage de 0,25-0,35.

6. Appareil de mise en fusion selon la revendication 4, ou 5, caractérisé par le fait que le volume de la réaction dans l'appareil de mise en fusion (1, 2) se situe à l'intérieur d'une plage allant de 0,77 m3/t à 1,29 m3/t de matières à mettre en fusion.

7. Appareil de mise en fusion selon l'une des revendications précédentes, caractérisé par le fait que la goulotte de laitier (18) obturable, dont il y a au moins une, est obturée par un tampon de laitier (18) qui va en s'élargissant vers l'extérieur et qui affleure, lisse, la paroi intérieur du récipient de la réaction (1, 2).

8. Appareil de mise en fusion selon l'une des revendications précédentes, caractérisé par le fait

a) qu'au moins une bobine magnétique (16), alimentée en courant continu, est disposée autour d'une partie médiane (22) du récipient de la réaction de l'appareil de mise en fusion, pour l'amortissement magnétique des mouvements du bain de fusion (7) et/ou du laitier (8) à l'intérieur de l'appareil de mise en fusion, et

b) que l'induction magnétique produite en exploitation par cette bobine magnétique (16) dont il y a au moins une se situe sur la plage de 50 mT - 120 mT.

9. Appareil de mise en fusion selon l'une des revendications précédentes, caractérisé par le fait que l'autre ouverture (15), dont il y a au moins une, est disposée, ainsi que le couvercle (4), à l'intérieur d'une hotte (3),

10. Emploi de l'appareil de mise en fusion selon l'une des revendications précédentes pour la fabrication de l'acier,

a) dans le cas duquel, dans une première étape du procédé d'obtention d'un bain de fusion, selon un procédé en mode convertisseur, on amène sous pression de l'oxygène dans l'espace intérieur de l'appareil de mise en fusion au moyen d'une conduite (12) d'amenée du gaz,
b) puis on remplace la conduite (12) d'amenée
du gaz par une électrode (5) et
c) dans une seconde étape du procédé on procède à une mise en fusion à l'arc électrique
dans le même appareil de mise en fusion.

FIG.1

FIG.2

1'

11

4

23

22

16

21

26

17

17'

14

8

9

5

18'

25

5'

7

6

24

FIG.3